# EUROPEAN PATENT APPLICATION

(11) **EP 1 513 145 A2**
(43) Date of publication of application: **09.03.2005**
(21) Application number: 04028551.2
(22) Date of filing: 03.04.2003
(51) Int. Cl.: G11B 7/26, G11B 7/24

(54) **Optical information recording medium and production process thereof**

(30) Priority: 08.04.2002 JP 2002105265; 08.04.2002 JP 2002105266; 15.04.2002 JP 2002112212; 15.04.2002 JP 2002112214
(62) Divisional of application: 03252126.2
(71) Applicant: Fuji Photo Film Co., Ltd., Kanagawa (JP)
(72) Inventor: Usami, Yoshihisa, c/o Fuji Photo Film Co., Ltd., Odawara-shi, Kanagawa (JP)
(74) Representative: Stevens, Jason Paul

(57) **Abstract**

An optical information recording medium production process includes a laminated body production step, and a co-adhesion step including, after sticking a cover sheet (100) provided with a release sheet (200) on the laminated body, releasing the release sheet, starting from a protruding portion (200a) of the release sheet. Also disclosed is an optical information recording medium produced by this process.

## Description

### BACKGROUND OF THE INVENTION

### Field of the Invention

The present invention relates to an optical information recording medium and a production process thereof, and particularly to an optical information recording medium of a type that is written once by heat mode and to a production process thereof.

### Description of the Related Art

Heretofore, optical information recording media (optical discs) capable of recording information, once only, with laser light have been known. These optical information recording media are referred to as write-once CDs (known as "CD-R"). In a representative structure thereof, a recording layer formed of an organic colorant, an optical reflection layer formed of a metal such as gold or the like, and a protection layer formed of a resin are laminated in this order on a transparent disc-form substrate. Recording of information on such a CD-R is implemented by irradiating near-infrared laser light (commonly laser light with a wavelength in the vicinity of 780 nm) at the CD-R. Consequent to the irradiation of the laser light, an irradiated portion of the recording layer absorbs this light, the temperature rises locally, and optical characteristics of that portion are changed by a physical or chemical change (for example, the formation of a pit). Thus, the information is recorded. Reading (playback) of the information is implemented by again irradiating laser light, with a wavelength the same as the laser light that was used for recording, at the CD-R. The information is read by detecting a difference in reflectivity between sites at which optical characteristics of the recording layer have been changed (recorded portions) and sites which have not been changed (unrecorded portions).

In recent years, optical information recording media with higher recording densities have been called for. In response to such demands, an optical information recording medium referred to as a write-once digital versatile disc (known as "DVD-R") has been proposed (e.g., *Nikkei New Media, DVD* supplement, published in 1995). These DVD-Rs have a structure in which two discs are stuck together with recording layers thereof at inner sides, or in which a disc is stuck together with a disc-form protective support with the recording layer of the disc between the substrate and the cover sheet. In these discs, generally, the recording layer, which includes an organic colorant, an optical reflection layer, and a protective layer are laminated in this order on a transparent disc-form substrate. A guidance structure (pre-groove) for tracking of irradiated laser light is formed in the substrate with a narrow groove width (0.74 to 0.8 µm) which is less than half the corresponding dimension in a CD-R. Recording and playback of information on these DVD-Rs is implemented by irradiation of visible laser light (generally, laser light with a wavelength in a range from 630 nm to 680 nm), and recording at a higher density than is possible in CD-Rs.

Recently, high speeds have been becoming more widespread in networks such as the Internet and in Hi-Vision TV and the like. Moreover, broadcasts of HDTV (high definition television) have been commenced. Given these circumstances, high-volume recording media that can record image information cheaply and easily are being called for. DVD-R adequately fulfils the role of a high-volume recording medium in the current circumstances. However, demands for greater volumes and higher densities are continually rising further, and there is a need to develop recording media that can meet these demands. Accordingly, development of higher-volume recording media that are capable of implementing recording at higher densities with light of shorter wavelengths than with DVD-Rs is being pushed ahead.

For example, Japanese Patent Application Laid-Open (JP-A) Nos. 4-74690, 7-304256, 7-304257, 8-127174, 11-53758, 11-334204, 11-334205, 11-334206, 11-334207, 2000-43423, 2000-108513, 2000-113504, 2000-149320, 2000-158818 and 2000-228028 have disclosed information recording/replaying methods which implement recording and playback of information at an optical information recording medium, which has a recording layer including an organic colorant, by irradiating laser light with a wavelength of 530 nm or less from a recording layer side toward an optical reflection layer side. In these methods, the recording and playback of information is implemented by irradiating laser light which is blue light (wavelength 430 nm or 488 nm) or blue-green light (wavelength 515 nm) at an optical information recording medium provided with a recording layer which includes a porphyrin compound, an azo-based dye, a metallic azo-based dye, a quinophthalone-based dye, a trimethine cyanine dye, a dicyanovinylphenyl skeleton dye, a coumarin compound, a naphthalocyanine compound or the like.

With a view to compatibility with the CD-R system that is currently in use, optical information recording media that can be recorded and replayed with laser light in two different wavelength regions have been proposed. For example, JP-A Nos. 2000-141900, 2000-158816, 2000-185471, 2000-289342 and 2000-309165 have disclosed optical information recording media which can be recorded and replayed by laser light which is either of near-infrared laser light in the vicinity of 780 nm and visible laser light in the vicinity of 650 nm, by mixing and employing dyes that are used in CD-Rs with dyes that are used in DVD-Rs.

However, according to investigations by the present inventor, it has been determined that with the optical information recording media described in the above-mentioned publications, if information is recorded by irradiation with short-wavelength laser light at a wavelength of 450 nm or less, levels of sensitivity that are required in practice cannot be provided. Further, other recording characteristics, such as reflectance, modulation and the like, are not at satisfactory levels, and it has been judged that further improvements are needed. In particular, with the optical information recording media described in the above-mentioned publications, it has been recognized that recording characteristics are weaker in cases in which laser light with a wavelength of 450 nm or less is irradiated.

In the optical information recording media described in the above-mentioned publications, a cover sheet is provided at an outermost layer of the medium.

This cover sheet has an internal diameter the same as an internal periphery of the substrate. An internal periphery boss of the cover sheet is matched up with an internal periphery boss of the substrate and the cover sheet is stuck together with the substrate. However, when the inner periphery bosses are matched up for this co-adhesion, it is difficult to stick the cover sheet and substrate together with high accuracy. As a result, a portion of the inner periphery of the cover sheet protrudes to an inner side of a central hole of the substrate.

When playback is implemented in the state in which the portion of the cover sheet is protruding to the inner side of the central hole of the substrate, there is great eccentricity, and accurate playback is impossible.

Further, when an optical information recording medium described in the above-mentioned publications is being produced, the cover sheet, which is an outermost layer, is stuck on the recording layer. At this time, if the substrate at which the recording layer is formed is disposed underneath and the cover sheet is co-adhered thereonto, bending, creasing and the like will occur, because the cover sheet is thin. As a result, warping will occur after this co-adhesion, and it is impossible to provide an optical information recording medium for practical use.

As a method for sticking on the cover sheet, there is a method of co-adhering the cover sheet on the recording layer in which the cover sheet is employed in the form of a wound roll.

However, in this method, because the cover sheet was in the form of a roll before being stuck on, warping occurs after the co-adhesion, due to a winding curve of the cover sheet, and it may not be possible to provide a medium for practical use.

Alternatively, there is a method in which the cover sheet is trimmed in advance to substantially the same shape as a laminated body formed with the recording layer and the like, and then the trimmed cover sheet is stuck onto the laminated body.

In this method, warping due to a rolling curve almost never occurs. However, when the cover sheet is stuck on, a release sheet has identical dimensions to the cover sheet. In consequence, peeling off the release sheet will be troublesome, an end face of the cover sheet may be damaged and, as above, it may not be possible to provide a medium for practical use.

### SUMMARY OF THE INVENTION

Given the above, an object of the present invention is to provide an optical information recording medium which can reduce eccentricity during playback and a production process thereof, to provide an optical information recording medium which can suppress the occurrence of warping and a production process thereof, and to provide an optical information recording medium which can suppress the occurrence of warping and can be provided for practical use without an end face of a cover sheet being damaged, and a production process thereof.

The object described above is achieved by the present invention illustrated below.

A first aspect of the present invention is an optical information recording medium production process including: a laminated body preparing step for preparing a laminated body in which a recording layer, at which recording of information by laser light with a wavelength of 500 nm or less is possible, is formed on a substrate in which a groove with a track pitch of 200 to 400 nm and a groove depth of 10 to 150 nm is formed; and a co-adhering step for co-adhering a cover sheet with the laminated body while maintaining the cover sheet and the laminated body such that an internal peripheral face of the cover sheet is at an outer side relative to an internal peripheral face of the substrate.

In the first aspect, it is preferable if an internal diameter of the cover sheet is greater than an internal diameter of the substrate.

A second aspect of the present invention is an optical information recording medium production process including: a laminated body preparing step for preparing a laminated body in which a recording layer, at which recording of information by laser light with a wavelength of 500 nm or less is possible, is formed on a substrate in which a groove with a track pitch of 200 to 400 nm and a groove depth of 10 to 150 nm is formed; and a co-adhering step including the sub-steps of regulating a co-adhering position in accordance with an outer peripheral face of the substrate, and co-adhering a cover sheet with the laminated body, an internal diameter of the cover sheet being greater than an internal diameter of the substrate.

In the second aspect, it is preferable if a difference between an internal diameter of the cover sheet and a diameter of a central hole (the internal diameter) of the substrate is at least 1 mm.

A third aspect of the present invention is an optical information recording medium production process including: a laminated body preparing step for preparing a laminated body in which a recording layer, at which recording of information by laser light with a wavelength of 500 nm or less is possible, is formed on a substrate in which a groove with a track pitch of 200 to 400 nm and a groove depth of 10 to 150 nm is formed; and a co-adhering step including the sub-steps of placing a cover sheet on a flat table, and co-adhering the laminated body on the cover sheet such that the recording layer is between the substrate and the cover sheet.

In the third aspect, it is preferable if a surface of the flat table is equipped with holes.

A fourth aspect of the present invention is an optical information recording medium production process including the steps of: preparing a laminated body, including forming a recording layer, at which recording of information by laser light with a wavelength of 500 nm or less is possible, on a substrate in which a groove with a track pitch of 200 to 400 nm and a groove depth of 10 to 150 nm is formed; co-adhering a cover sheet on the recording layer of the laminated body, the cover sheet being provided with a release sheet at a face of the cover sheet which is opposite to a face thereof that is to be co-adhered, at least a portion of the release sheet including a protruding portion which protrudes to an outer side relative to the cover sheet; and, after co-adhering the cover sheet to the laminated body, releasing the release sheet, starting from the protruding portion.

In the fourth aspect, it is preferable if the protruding portion is present at the whole outer periphery of the cover sheet.

Further, in any of the first to fourth aspects that have been described, it is preferable if a thickness of the cover sheet is from 0.03 to 0.15 mm.

Moreover, in any of the first to fourth aspects that are described, it is preferable if a temperature when the cover sheet and the laminated body are stuck together is at least 18°C, and humidity is at least 32% RH.

A fifth aspect of the present invention is an optical information recording medium produced by a process including: a laminated body preparing step for preparing a laminated body in which a recording layer, at which recording of information by laser light with a wavelength of 500 nm or less is possible, is formed on a substrate in which a groove with a track pitch of 200 to 400 nm and a groove depth of 10 to 150 nm is formed; and a co-adhering step for co-adhering a cover sheet with the laminated body while maintaining the cover sheet and the laminated body such that an internal peripheral face of the cover sheet is at an outer side relative to an internal peripheral face of the substrate.

A sixth aspect of the present invention is an optical information recording medium produced by a process including: a laminated body preparing step for preparing a laminated body in which a recording layer, at which recording of information by laser light with a wavelength of 500 nm or less is possible, is formed on a substrate in which a groove with a track pitch of 200 to 400 nm and a groove depth of 10 to 150 nm is formed; and a co-adhering step including the sub-steps of regulating a co-adhering position in accordance with an outer peripheral face of the substrate, and co-adhering a cover sheet with the laminated body, an internal diameter of the cover sheet being greater than an internal diameter of the substrate.

A seventh aspect of the present invention is an optical information recording medium produced by a process including: a laminated body preparing step for preparing a laminated body in which a recording layer, at which recording of information by laser light with a wavelength of 500 nm or less is possible, is formed on a substrate in which a groove with a track pitch of 200 to 400 nm and a groove depth of 10 to 150 nm is formed; and a co-adhering step including the sub-steps of placing a cover sheet on a flat table, and co-adhering the laminated body on the cover sheet such that the recording layer is between the substrate and the cover sheet.

An eighth aspect of the present invention is an optical information recording medium produced by a process including: preparing a laminated body, including forming a recording layer, at which recording of information by laser light with a wavelength of 500 nm or less is possible, on a substrate in which a groove with a track pitch of 200 to 400 nm and a groove depth of 10 to 150 nm is formed; co-adhering a cover sheet on the recording layer of the laminated body, the cover sheet being provided with a release sheet at a face of the cover sheet which is opposite to a face thereof that is to be co-adhered, at least a portion of the release sheet including a protruding portion which protrudes to an outer side relative to the cover sheet; and, after co-adhering the cover sheet to the laminated body, releasing the release sheet, starting from the protruding portion.

### BRIEF DESCRIPTION OF THE DRAWINGS

Figure 1 is a sectional view for describing a co-adhesion process using a spin coater, which is utilized in a co-adhering step in accordance with first and fifth embodiments.
Figure 2 is a sectional view for describing another co-adhesion process using a spin coater, which is utilized in the co-adhering step in accordance with the first and fifth embodiments.
Figure 3 is a view for describing a co-adhesion process using a spin coater, which is utilized in a co-adhering step in accordance with second and sixth embodiments.
Figure 4 is a view for explaining an internal process using a spin coater, which is utilized in a co-adhering step in accordance with third and seventh embodiments.
Figure 5A is a diagram showing an example of a cover sheet with a release sheet attached, which is utilized in a production process of the present invention in accordance with fourth and eighth embodiments, and is a diagram showing an upper face of the cover sheet.
Figure 5B is a sectional view cut along A-A of Figure 5A, in accordance with the fourth and eighth embodiments.
Figure 6A is a diagram showing another example of a cover sheet with a release sheet attached, which is utilized in the production process of the present invention in accordance with the fourth and eighth embodiments, and is a diagram showing an upper face of the cover sheet.
Figure 6B is a sectional view cut along B-B of Figure 6A, in accordance with the fourth and eighth embodiments.

### DESCRIPTION OF THE PREFERRED EMBODIMENTS

### Optical Information Recording Medium and Production Process Thereof

### (1) First and Fifth Embodiments

An optical information recording medium (a fifth embodiment) of the present invention is produced by preparing a laminated body (a laminated body preparing step) in which a recording layer and the like are formed on a substrate having a central hole, in which a predetermined groove is formed, and sticking together (a co-adhering step) a cover sheet of a predetermined size with the laminated body such that the recording layer is between the substrate and the cover sheet, while maintaining the cover sheet and laminated body such that an inner peripheral face of the cover sheet is at an outer side relative to an inner peripheral face (a central hole) of the substrate.

Herebelow, a production process (a first embodiment) of the optical information recording medium of the present invention and the optical information recording medium (the fifth embodiment) obtained from that production process will be described in detail with emphasis on the co-adhering step.

### Co-Adhering Step

The co-adhering step is a step of sticking a cover sheet, which serves as a cover layer, on a recording layer of a later-described laminated body, in order to protect the recording layer and the like inside the optical information recording medium. The co-adhesion of the cover sheet and the laminated body is preferably carried out with a bonding adhesive or a pressure-sensitive adhesive.

The cover sheet is not particularly limited as long as it is a transparent material. However, preferably, cover sheets formed from polycarbonate, cellulose triacetate, polymethyl methacrylate, polychlorinated vinyl and the like are preferable.

Here, "transparent" means that the cover sheet is transparent to the extent of transmitting recording light and playback light (with a transmittance of at least 90 %).

Thickness of the cover sheet is preferably in a range from 0.03 to 0.15 mm, is more preferably in a range from 0.05 to 0.10 mm, and is even more preferably in a range from 0.07 to 0.098 mm. If the thickness is in such a range, effects that handling of the cover sheet in the co-adhering step is easy and coma aberrations can be suppressed are obtained.

An external diameter of the cover sheet (D_{A}) is preferably smaller than an external diameter of the substrate (D_{B}). Specifically, it is preferable if the value of D_{B} - D_{A} is at least 0.3 mm, it is more preferable if this value is at least 0.5 mm, and it is even more preferable if this value is at least 0.7 mm.

In consideration of covering an outer periphery of the recording layer, it is preferable if a difference (D_{A} - D_{C}) between the external diameter of the cover sheet (D_{A}) and an external diameter D_{C} of a recording area (the recording layer) is at least 0.3 mm, it is more preferable if this difference is at least 0.5 mm, and it is even more preferable if this difference is at least 0.7 mm.

It is also preferable if an internal diameter of the cover sheet (d_{A}) is smaller than a diameter of a central hole of the substrate (d_{B}).

With the conditions described above, it is possible to stick the cover sheet to the laminated body while maintaining the cover sheet such that the inner peripheral face of the cover sheet is at an outer side relative to the inner peripheral face of the substrate.

Specifically, it is preferable if the value of d_{A} - d_{B} is at least 1 mm, it is more preferable if this value is at least 3 mm, and it is even more preferable if this value is at least 5 mm.

If the internal diameter of the cover sheet is too large, then the internal diameter may impinge on the recording area, and characteristics may deteriorate. Furthermore, if the internal diameter is so large as to be very close to the recording area, then the recording area may be exposed if the end face of the cover sheet peels off, even just a little. Accordingly, a difference (d_{C} - d_{A}) between an internal diameter of the recording area (d_{C}) and the internal diameter of the cover sheet (d_{A}) is preferably at least 1 mm, is more preferably at least 3 mm, and is even more preferably at least 5 mm.

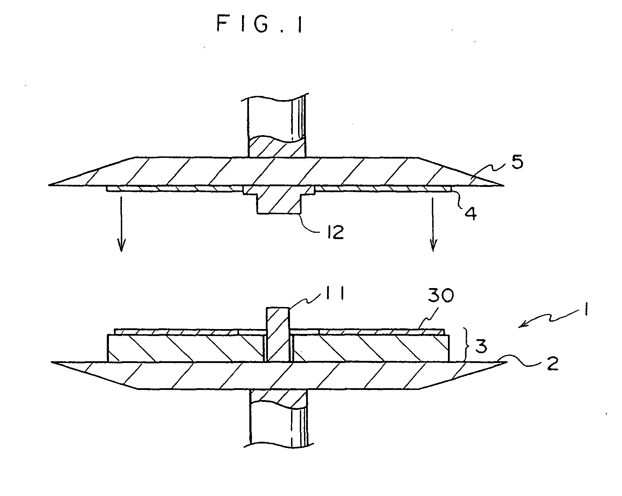

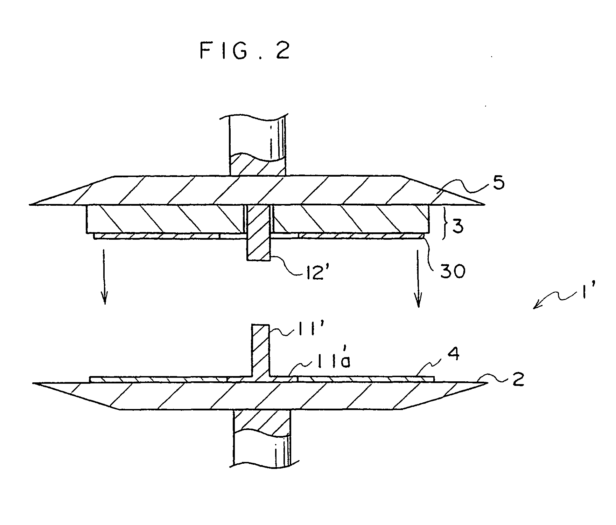

Sticking the cover sheet together with the laminated body can be implemented, for example, as shown in Figure 1 or Figure 2. Note that the co-adhering step in the production process of the present invention is not limited to these examples.

For a first method, as shown in Figure 1, a laminated body 3 is placed on a flat table 2 of a spin coater 1, such that a recording layer 30 or the like is upward in the drawing. After this placing, an adhesive is applied to the laminated body 3 as necessary. At this time, it is preferable if adsorbing means is provided at the flat table 2 and the laminated body 3 is preparatorily fixed by adsorption, in order that misplacement or the like due to oscillations does not occur during co-adhesion.

The cover sheet 4, which is adsorbingly held by an adsorption pad 5, is brought down. An inner periphery boss 11 provided at the flat table 2 and an inner periphery boss 12 provided at the adsorption pad 5 are engaged, and the cover sheet 4 is placed on the laminated body 3.

At this time, because the cover sheet 4 is co-adhered with the interior diameter of the cover sheet 4, which is adsorbingly held at the adsorption pad 5, being greater than the interior diameter of the substrate and the cover sheet 4 being maintained such that the inner peripheral face thereof is at the outer side relative to the inner peripheral face of the substrate, there will not be any portion of the cover sheet 4 that protrudes inward relative to the central hole of the substrate, and it is possible to reduce eccentricity of the optical information recording medium at times of playback.

Further, because the inner diameter of the cover sheet 4 is greater than the inner diameter of the substrate, protrusion of a portion of the cover sheet 4 at an inner peripheral portion of the substrate (the central hole) will not occur even if the position of sticking together is shifted somewhat.

For a second method of sticking the cover sheet together with the laminated body, as shown in Figure 2, the cover sheet 4 is placed on the flat table 2 of a spin coater 1', such that a face that is to be co-adhered is upward in the drawing. An inner periphery boss 11' provided at the flat table 2 is engaged with an inner periphery boss 12' provided at the adsorption pad 5, and the laminated body 3 is placed on the cover sheet 4. Here, it is preferable if adsorbing means is provided in advance at the flat table, similarly to the first method. Further, it is preferable if, as necessary, an adsorbing means system separate from the aforementioned adsorbing means is also provided at a laminated body contact surface 11'a of the inner periphery boss 11'.

Note that members and the like in Figure 2 that have reference numbers the same as in Figure 1 have the same functions as the corresponding members and the like.

The laminated body adsorbingly held by the adsorption pad 5 is brought down such that the recording layer and the like thereof will be between the substrate and the cover sheet. The inner periphery boss provided at the flat table 2 and the inner periphery boss provided at the adsorption pad 5 are engaged, and the laminated body 3 is placed on the cover sheet 4.

Similarly to the case of Figure 1, because the cover sheet 4 is co-adhered with the inner diameter of the cover sheet 4 that has been placed on the flat table 2 being greater than the inner diameter of the substrate, while maintaining the inner peripheral face of the cover sheet 4 at the outer side relative to the inner peripheral face of the substrate, there will not be any portion of the cover sheet that protrudes inward relative to the central hole, and it is possible to reduce eccentricity of the optical information recording medium at times of playback.

As the means that adsorbs the cover sheet 4 at the adsorption pad 5, vacuum adsorption means, in which small holes are formed in an adsorption surface and pressure in the holes is reduced for adsorbing the cover sheet 4, electrostatic adsorption means, in which static electricity is applied at the cover sheet 4 and the cover sheet 4 is adsorbed by electrical attraction, and the like can be preferably employed.

In a case in which a pressure-sensitive adhesive has been applied to the co-adhesion face of the cover sheet 4 in advance, there is no need to apply a bonding adhesive.

Further, as has already been mentioned, for sticking the cover sheet and the laminated body together while maintaining the inner peripheral face of the cover sheet at the outer side relative to the inner peripheral face of the substrate, it is effective to make the inner diameter of the cover sheet greater than the inner diameter of the substrate. Here, as shown in Figures 1 and 2, it is preferable if the inner peripheral bosses which are to be employed at the time of co-adhesion are suitably selected to fit with the inner diameters of the laminated body and the cover sheet.

After the cover sheet 4 has been placed on the laminated body 3 (after the laminated body 3 has been placed on the cover sheet 4 in the case of Figure 2), the flat table 2 is rotated and the adhesive is spread over the whole area between the cover sheet 4 and the laminated body 3. Thereafter, ultraviolet rays or the like are irradiated as necessary, and the adhesive or the like is cured. Thus, an optical information recording medium in which the cover sheet 4 and the laminated body 3 are stuck together is prepared.

The temperature and humidity of the atmosphere when the recording layer (in a case in which a layer such as a barrier layer or the like is formed over the recording layer, this layer) of the laminated body 3 is co-adhered with the cover sheet, are preferably at least 18°C and 32% RH, respectively. If the temperature is less than 18°C or the humidity is less than 32% RH, a chemical or physical reaction necessary for co-adhesion may not proceed sufficiently, stress release may occur when the temperature and humidity return to normal temperature and humidity, warping of the optical information recording medium after production may occur, and the medium cannot be provided for practical use. Furthermore, in cases in which a colorant is included in the recording layer, stress thereof may exert an adverse effect on recording characteristics.

The temperature is more preferably at least 20°C, even more preferably at least 22°C, and particularly preferably at least 23°C.

Furthermore, the humidity is more preferably at least 35% RH, even more preferably at least 38% RH.

If the temperature is too high, an alteration of the bonding adhesive or pressure-sensitive adhesive will occur, characteristics of the optical information recording medium will be changed, and warping may occur when the temperature returns to normal temperature, which is not preferable. Further, in cases in which a colorant is included in the recording layer, there may be a large change in recording characteristics, which is particularly unpreferable. Moreover, in cases in which a colorant is included in the recording layer, moisture content in the colorant will rise, and this may exert an adverse effect on recording characteristics, which is particularly unpreferable. Accordingly, it is preferable to set an upper limit of temperature to not more than 50°C, more preferably 40°C or less, and even more preferably 35°C or less.

If the humidity is too high, condensation will occur at a portion of the equipment, and warping may occur when humidity returns to normal humidity, which is not preferable. Accordingly, an upper limit of humidity is preferably set to at most 80% RH, more preferably to 70% RH or less, and even more preferably to 65% RH or less.

As a bonding adhesive, it is preferable to employ a UV-curable resin, an EB-curable resin, a thermo-curable resin or the like. In particular, it is preferable to employ a UV-curable resin.

The bonding adhesive is preferably, for example, applied to a co-adhering face of the laminated body 3 (the recording layer or the like) in a predetermined amount, uniformly spread between the laminated body 3 and the cover sheet 4 by spin coating after co-adhesion with the cover sheet 4, and then cured.

The amount of the bonding adhesive to be applied is regulated such that a thickness of an adhesive layer that is ultimately formed is in a range from 0.1 to 100 µm, preferably in a range from 2 to 50 µm, and more preferably in a range from 5 to 30 µm.

In a case in which a UV-curable resin is employed as the bonding adhesive, the UV-curable resin may be supplied from a dispenser to the surface of the laminated body 3 as is, or may be dissolved in an appropriate solvent such as methyl ethyl ketone, ethyl acetate or the like to prepare a coating fluid. In order to prevent warping of the optical information recording medium that is prepared, the UV-curable resin that structures the adhesive layer preferably has a small curing contraction ratio. Examples of such UV-curable resins may include UV-curable resins such as SD-640, produced by Dainippon Ink And Chemicals, Incorporated, and the like.

As mentioned earlier, a sheet at which a pressure-sensitive adhesive is applied to a co-adhering face may be employed as the cover sheet 4.

As this pressure-sensitive adhesive, an acrylic pressure-sensitive adhesive or a rubber-based pressure-sensitive adhesive, such as natural rubber, a styrene-isoprene-styrene copolymer (SIS), a styrene-butadiene-styrene copolymer (SBS) or the like, may be appropriately selected and utilized.

It is preferable if this pressure-sensitive adhesive has been applied to the co-adhering face of the cover sheet in advance. It is preferable if an application amount of the pressure-sensitive adhesive is the same as in the case of a bonding adhesive.

The flat table 2 is not limited to the flat table 2 which is provided at the spin coater 1 as described above. It is sufficient that the flat table 2 can fix and maintain flatness of the cover sheet 4 and laminated body 3 at the time of sticking together the cover sheet 4 and the laminated body 3.

An optical information recording medium relating to the fifth embodiment, which suppresses eccentricity during playback, is prepared by the co-adhering step described above.

The laminated body 3 that is to be stuck together with the cover sheet 4 in the co-adhering step is prepared in a laminated body preparation process. Specifically, in a recording layer formation step or the like, a recording layer is formed on a substrate. This substrate has a central hole and is formed with a groove with a track pitch of 200 to 400 nm and a groove depth of 10 to 150 nm, and this recording layer is capable of being recorded with information by laser light with a wavelength of 500 nm or less.

Here, a light reflection layer formation step or the like, for forming a light reflection layer between the substrate and the recording layer, is provided, and steps for forming various layers such as a barrier layer and the like on the recording layer may be appropriately provided.

Herebelow, as a specific example of the laminated body preparation process, a process for producing a laminated body in which a light reflectance layer and a recording layer are formed on a substrate (the laminated body preparing step) will be described.

### Laminated Body Preparation Process

### Light Reflection Layer Formation Step

The light reflection layer formation step is a process for forming a light reflection layer, which is formed of a light-reflective material, at a face in which a groove has been formed in a substrate, which is described later.

For the substrate, any of various materials that have been utilized as substrate materials in conventional optical information recording media can be freely selected and employed.

Specific examples include: glass; acrylic resins such as polycarbonate, polymethyl methacrylate and the like; vinyl chloride-based resins such as polyvinyl chloride, vinyl chloride copolymers and the like; epoxy resins; amorphous polyolefins; polyesters; metals such as aluminium and the like; and the like, and these may be used in combination as desired.

Of the materials mentioned above, in view of humidity resistance, dimensional stability, low costs and the like, amorphous polyolefins and polycarbonates are preferable, and polycarbonates are particularly preferable. The thickness of the substrate is preferably set to 1.1 ± 0.3 mm.

At the substrate surface, a guidance groove for tracking, and/or protrusions and depressions (grooves) which represent information for address signals and the like, is formed. The track pitch of this pre-groove is necessarily set in a range from 200 to 400 nm, and is preferably in a range from 250 to 350 nm. The depth (groove depth) of the pre-groove is necessarily set in a range from 10 to 150 nm, and is preferably in a range from 50 to 100 nm.

With a track pitch and groove as described above, an information density higher than with conventional CD-Rs (compact discs), DVD-Rs (digital versatile discs) and the like can be achieved.

For purposes of improving flatness and adhesion strength, it is preferable to form an undercoat layer at a substrate surface at a side of the substrate at which the light reflection layer, which is described below, is to be provided.

Examples of materials for the undercoat layer may include: high molecular weight materials such as polymethyl methacrylate, a copolymer of acrylic acid and methacrylic acid, a copolymer of styrene and anhydrous maleic acid, polyvinyl alcohol, N-methylol acrylamide, a copolymer of styrene and vinyl toluene, chlorosulfonated polyethylene, nitrocellulose, polyvinyl chloride, polyolefin chloride, polyester, polyimide, a copolymer of vinyl acetate and vinyl chloride, a copolymer of ethylene and vinyl acetate, polyethylene, polypropylene, polycarbonate and the like; and surface modification agents such as silane coupling agents and the like.

The undercoat layer may be formed by dissolving or dispersing a material mentioned above in an appropriate solvent to prepare a coating fluid, and then applying this coating fluid to the substrate surface by a coating method such as spin coating, dip coating, extrusion coating or the like. A thickness of the undercoat layer is generally in a range from 0.005 to 20 µm, and is preferably in a range from 0.01 to 10 µm.

The light reflection layer may be formed on the substrate, by vapor deposition, sputtering or ion plating, with an optically reflective material whose reflectance with respect to the laser light is high. A layer thickness of the light reflection layer is generally in a range from 10 to 300 nm, and is preferably in a range from 50 to 200 nm.

The aforementioned light reflectance is preferably at least 70 %.

Metals and semi-metals, such as Mg, Se, Y, Ti, Zr, Hf, V, Nb, Ta, Cr, Mo, W, Mn, Re, Fe, Co, Ni, Ru, Rh, Pd, Ir, Pt, Cu, Ag, Au, Zn, Cd, Al, Ga, In, Si, Ge, Te, Pb, Po, Sn, Bi and the like, or stainless steel may be used as the optically reflective material with high reflectance. These optically reflective materials may be used individually, and may be used in combinations of two or more, or in alloys. Of these materials, Cr, Ni, Pt, Cu, Ag, Au, Al and stainless steel are preferable. Au, Ag, Al and alloys thereof are particularly preferable, and Au, Ag and alloys thereof are most preferable.

### Recording Layer Formation Step

The recording layer formation step is a process for forming a recording layer, at which recording of information by laser light having a wavelength of 500 nm or less is possible, over the optical reflection layer. It is preferable if a colorant is included at the reflection layer, to serve as a recording material.

The colorant to be included at the recording layer is not particularly limited as long as it is a colorant at which information can be recorded by laser light with a wavelength of 500 nm or less. Examples thereof include cyanine dyes, oxonol dyes, metal complex-based dyes, azo dyes, phthalocyanine dyes and the like.

Further, colorants described in Japanese Patent Application Laid-Open (JP-A) Nos. 4-74690, 8-127174, 11-53758, 11-334204, 11-334205, 11-334206, 11-334207, 2000-43423, 2000-108513 and 2000-158818 can be suitably utilized.

The recording layer is formed by dissolving a recording material, such as a colorant or the like, in a suitable solvent, together with a binder and the like, to prepare a coating fluid, thereafter applying this coating fluid on the optical reflection layer formed on the substrate surface to form a coating film, and then drying. A density of the recording material in the coating fluid is generally in a range from 0.01 to 15 % by weight, is preferably in a range from 0.1 to 10 % by weight, is more preferably in a range from 0.5 to 5 % by weight, and is most preferably in a range from 0.5 to 3 % by weight.

Solvents which may be used as the solvent of the coating fluid include: esters such as butyl acetate, ethyl lactate, cellosolve acetate and the like; ketones such as methyl ethyl ketone, cyclohexanone, methyl isobutyl ketone and the like; chlorinated hydrocarbons such as dichloromethane, 1,2-dichloroethane, chloroform and the like; amides such as dimethyl formamide and the like; hydrocarbons such as methyl cyclohexane and the like; ethers such as tetrahydrofuran, ethyl ether, dioxane and the like; alcohols such as ethanol, n-propanol, isopropanol, n-butanol diacetone alcohol and the like; fluorine-based solvents such as 2,2,3,3-tetrafluoropropanol and the like; glycol ethers such as ethylene glycol monomethyl ether, ethylene glycol monoethyl ether, propylene glycol monomethyl ether and the like; and the like.

The solvents mentioned above may be employed singly or in a combination of two or more, with due consideration to solubility of the recording material. Various additives such as an anti-oxidation agent, a UV-absorbing agent, a plasticizer, a lubricant and the like may be added to the coating fluid in accordance with objects.

In cases in which a binder is employed, examples of the binder include: natural organic high polymer materials such as gelatin, cellulose derivatives, dextrane, rosin, rubber and the like; and synthetic organic high polymers such as: hydrocarbon resins such as polyethylene, polypropylene, polystyrene, polyisopropylene and the like; vinyl-based resins such as polyvinyl chloride, polyvinylidene chloride, copolymers of polyvinyl chloride and polyvinyl acetate, and the like; acrylic resins such as methyl polyacrylate, methyl polymethacrylate and the like; polyvinyl alcohol, polyethylene chloride, epoxy resin, butyral resin, rubber derivatives, initial condensates of thermosettable resins such as phenol formaldehyde resins and the like; and the like. In a case in which the binder is used in combination for the material of the recording layer, a usage amount of the binder is generally in a range from 0.01 parts by weight to 50 parts by weight relative to the recording material (mass ratio), and is preferably in a range from 0.1 parts by weight to 5 parts by weight (mass ratio). The density of the recording material in the coating fluid that is prepared in this manner is generally in a range from 0.01 to 10 % by weight, and is preferably in a range from 0.1 to 5 % by weight.

Examples of a method for coating may include a spraying method, a spin coating method, a dipping method, a roll coating method, a blade coating method, a doctor roll method, a screen printing method and so forth. The recording layer may be a single layer, or may be a laminated layer. Thickness of the recording layer is generally in a range from 20 to 500 nm, is preferably in a range from 30 to 300 nm, and is more preferably in a range from 50 to 100 nm.

Various fading prevention agents may be included at the recording layer in order to improve light fastness of the recording layer.

Singlet oxygen quenchers are commonly utilized as fading prevention agents. Singlet oxygen quenchers that have already been described in well-known publications such as patent specifications and the like may be employed.

Specific examples thereof may include agents described in JP-A Nos. 58-175693, 59-81194, 60-18387, 60-19586, 60-19587, 60-35054, 60-36190, 60-36191, 60-44554, 60-44555, 60-44389, 60-44390, 60-54892, 60-47069, 63-209995 and 4-25492, Japanese Patent Application Publication (JP-B) Nos. 1-38680 and 6-26028, the specification of German Patent No. 350,399, page 1141 of the October 1992 issue of *The Bulletin of the Chemical Society of Japan,* and the like.

A usage amount of a fading prevention agent, such as the above-mentioned singlet oxygen quencher or the like, is usually in a range of 0.1 to 50 % by weight relative to mass of the colorant, is preferably in a range from 0.5 to 45 % by weight, is even more preferably in a range from 3 to 40 % by weight, and is particularly preferably in a range from 5 to 25 % by weight.

After the recording layer has been formed, a layer, which is formed of a material such as an oxide, nitride, carbide, sulfide or the like formed with any one or more of Zn, Si, Ti, Te, Sm, Mo, Ge and the like, may be formed to serve as a barrier layer. The material that structures the barrier layer may be hybridized, such as ZnS-SiO₂. It is possible to form the barrier layer by sputtering, vapor deposition, ion plating or the like, and a thickness thereof is preferably set from 1 to 100 nm.

A laminated body in which an optical reflection layer, a recording layer and the like are formed is fabricated as described above.

### (2) Second and Sixth Embodiments

An optical information recording medium (a sixth embodiment) of the present invention is produced by preparing a laminated body in which a recording layer and the like are formed on a substrate in which a predetermined groove is formed (a laminated body preparing step), adjusting a cover sheet of a predetermined size and the laminated body to a co-adhesion position in accordance with an outer peripheral face of the substrate, and sticking together a cover sheet and the laminated body such that the recording layer is between the substrate and the cover sheet (a co-adhering step).

Herebelow, the optical information recording medium (the sixth embodiment) of the present invention and a production process thereof (a second embodiment) will be described in detail with emphasis on the co-adhering step.

### Co-Adhering Step

The co-adhering step is a process of sticking a cover sheet, which serves as a cover layer, on the recording layer of the laminated body described for the first and fifth embodiments, in order to protect the recording layer and the like inside the optical information recording medium. The co-adhesion of the cover sheet and the laminated body is preferably carried out with a bonding adhesive or a pressure-sensitive adhesive.

Material and thickness of the cover sheet are as described for the first and fifth embodiments. Further, the relationship between the outer diameter of the cover sheet (D_{A}) and the outer diameter of the substrate (D_{B}), and the difference (D_{A} - D_{C}) between the outer diameter of the cover sheet (D_{A}) and the outer diameter D_{C} of the recording area (recording layer) are as described for the first and fifth embodiments.

Further still, the relationship (d_{A} - d_{B}) between the internal diameter of the cover sheet (d_{A}) and the diameter of the central hole of the substrate (internal diameter d_{B}) is as described for the first and fifth embodiments. Further yet, the difference (d_{A} - d_{C}) between the inner diameter of the cover sheet (d_{A}) and the inner diameter d_{C} of the recording area is as described for the first and fifth embodiments.

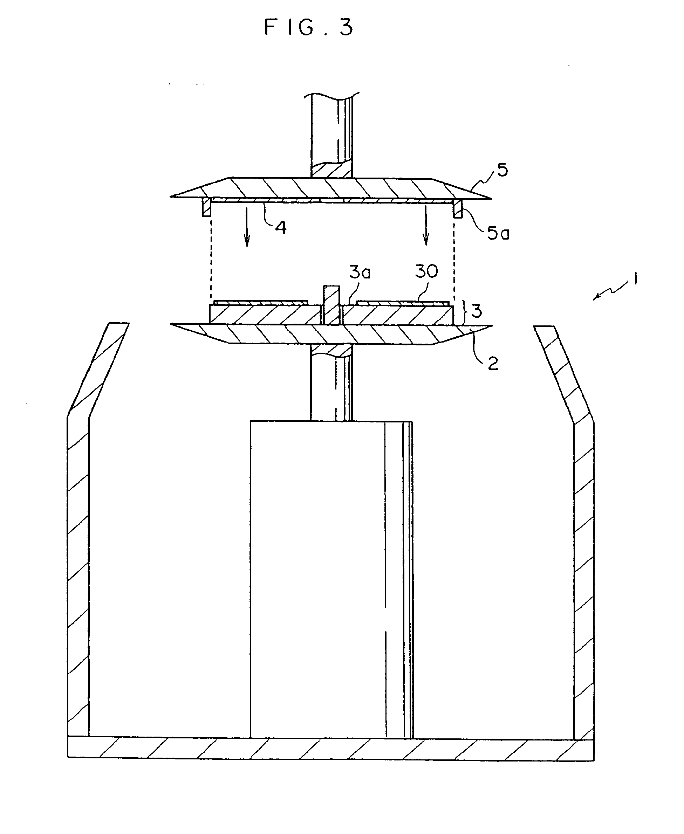

When the cover sheet and the laminated body are to be stuck together in the production process according to the second embodiment, the co-adhesion position of the cover sheet is regulated by an outer peripheral face of the substrate. The regulation of the co-adhesion position may, for example, be carried out as shown in Figure 3.

First, as shown in Figure 3, the laminated body 3 is placed on the flat table 2 of the spin coater 1 such that the recording layer 30 or the like is upward in the drawing.

An adhesive is applied on the laminated body 3 which has been placed. Thereafter, the cover sheet 4, which is adsorbingly held by the adsorption pad 5, descends and is placed on the recording layer 30.

Here, a positioning chuck 5a, which protrudes downward in the drawing, is provided at a periphery of an adsorption face of the adsorption pad 5.

The cover sheet 4 is brought down on to the laminated body 3, while an internal peripheral face of the positioning chuck 5a contacts or adjoins the outer peripheral face of the substrate 3a. Thus, the co-adhesion position is regulated by the outer peripheral face of the substrate 3a. Consequently, co-adhesion is possible with a higher accuracy than conventional positioning in accordance with the central hole of the substrate (the laminated body) and the central hole of the cover sheet. Hence, there will not be a portion of the cover sheet that protrudes to the inner side of the central hole of the substrate, and eccentricity during playback of the optical information recording medium can be reduced.

As the means that adsorbs the cover sheet 4 at the adsorption pad 5, the vacuum adsorption means, in which small holes are formed in the adsorption surface and pressure in the holes is reduced for adsorbing the cover sheet 4, the electrostatic adsorption means, in which static electricity is applied at the cover sheet 4 and the cover sheet 4 is adsorbed by electrical attraction, and the like can be preferably employed.

To release the cover sheet 4, the low pressure in the small holes may be released and the pressure therein increased somewhat, or the like.

In a case in which a pressure-sensitive adhesive has been applied to the co-adhesion face of the cover sheet 4 in advance, there is no need to apply a bonding adhesive.

The positioning chuck 5a may be provided along the whole of the periphery of the adsorption face of the adsorption pad 5, or may be provided at portions thereof. A length of the positioning chuck 5a (a length from the adsorption face in the vertical direction) may be suitably specified within a range such that there are no problems in operation.

Furthermore, it is preferable if the internal peripheral face of the positioning chuck 5a has the same curvature as the outer periphery of the substrate 3a of the laminated body 3.

After the cover sheet 4 has been placed on the laminated body 3, the flat table 2 is rotated and the adhesive is spread over the whole area between the cover sheet 4 and the laminated body 3. Thereafter, ultraviolet rays or the like are irradiated as necessary, and the adhesive or the like is cured. Thus, an optical information recording medium in which the cover sheet 4 and the laminated body 3 are stuck together is prepared.

The temperature and humidity of the atmosphere when the recording layer (in a case in which a layer such as a barrier layer or the like is formed over the recording layer, this layer) of the laminated body 3 is co-adhered with the cover sheet are as described for the first and fifth embodiments.

Bonding adhesives and pressure-sensitive adhesives are also as described for the first and fifth embodiments.

Similarly to the first and fifth embodiments, the flat table 2 is not limited to the flat table 2 which is provided at the spin coater 1 as described above. That is, it is sufficient merely that the flat table 2 can fix and maintain flatness of the cover sheet 4 and laminated body 3 at the time of sticking together the cover sheet 4 and the laminated body 3.

An optical information recording medium relating to the sixth embodiment, which suppresses eccentricity during playback, is prepared by the co-adhering step described above.

The laminated body 3 that is to be stuck together with the cover sheet 4 in the co-adhering step is prepared by a laminated body preparation process. The laminated body preparation process is as has been described for the first and fifth embodiments.

### (3) Third and Seventh Embodiments

An optical information recording medium (a seventh embodiment) of the present invention is produced by preparing a laminated body in which a recording layer and the like are formed on a substrate (a laminated body preparing step), and sticking together a cover sheet, which has been placed on a flat table, and the laminated body such that the recording layer is between the substrate and the cover sheet (a co-adhering step).

Herebelow, the optical information recording medium (the seventh embodiment) of the present invention and a production process thereof (a third embodiment) will be described in detail with emphasis on the co-adhering step.

### Co-Adhering Step

The co-adhering step is a step of sticking a cover sheet, which serves as a cover layer, on a recording layer of a laminated body in which the recording layer and the like are formed on a substrate (the laminated body described for the first and fifth embodiments), in order to protect the recording layer and the like inside the optical information recording medium. The co-adhesion of the cover sheet and the laminated body is preferably carried out with a bonding adhesive or a pressure-sensitive adhesive.

Material and thickness of the cover sheet are as described for the first and fifth embodiments.

In order that creasing and the like does not occur when the cover sheet is co-adhered with the laminated body, the cover sheet is preparatorily placed on the flat table in advance. Because the cover sheet is preparatorily placed thus, flatness of the face of the cover sheet that is to be co-adhered is assured. As a result, it is possible to prevent the generation of wrinkling and the like when the cover sheet is stuck together with the laminated body.

The co-adhesion of the cover sheet and the laminated body may be carried out as described below.

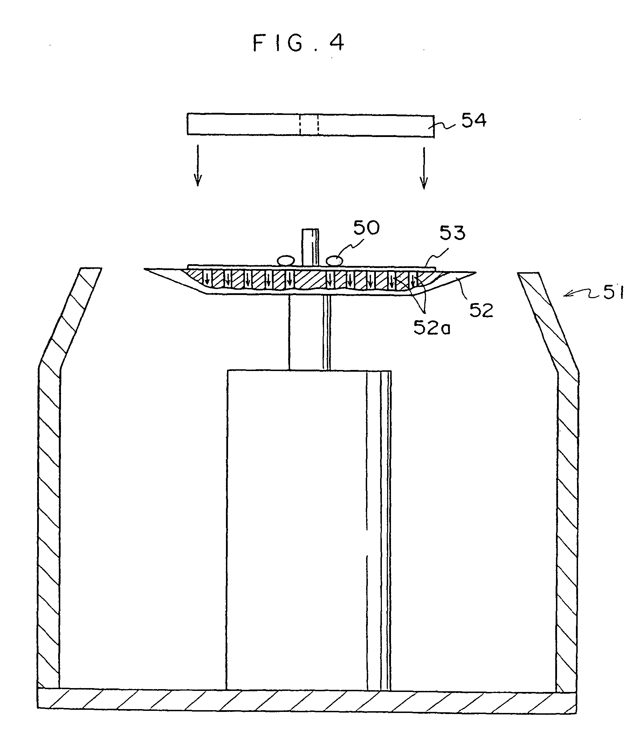

First, as shown in Figure 4, a cover sheet 53 is placed on a flat table 52 of a spin coater 51. Then adhesive 50 is dripped thereon.

Holes 52a with small diameters are formed in a surface of the flat table 52, and are connected with an unillustrated air extraction system. A valve (not shown) is provided in the air extraction system. Air extraction amounts are adjusted using this valve, and thus adsorption force on the cover sheet is regulated.

If the diameters of the holes 52a formed in the surface of the flat table 52 are too large, adsorbed portions of the cover sheet 53 will be recessed during adsorption, and indentations may be generated in the surface of a disc that is prepared. Accordingly, it is preferable if the diameters of the holes 52a are not more than 3 mm, more preferably 2 mm or less, and even more preferably 1 mm or less.

Furthermore, it is preferable that the holes 52a are formed at least at a region of the flat table 52 at which the cover sheet 53 is provided, and it is preferable if the holes 52a are formed at least at a portion which does not correspond to the recording area, such that the disc does not lift off during rotation.

In the state in which the cover sheet 53 has been placed, a laminated body 54 is co-adhered therewith. The laminated body 54 is co-adhered such that the recording layer thereof is at the lower side in the drawing. The flat table 52 is rotated and the adhesive 50 is spread over the whole area between the cover sheet 53 and the laminated body 54. Ultraviolet rays or the like are irradiated, and the adhesive 50 is cured. Thus, an optical information recording medium in which the cover sheet 53 and the laminated body 54 are stuck together is prepared.

In a case in which a pressure-sensitive adhesive has been applied to the co-adhesion face of the cover sheet 53 in advance, there is no need to apply a bonding adhesive at the laminated body 54.

The temperature and humidity of the atmosphere when the recording layer (in a case in which a layer such as a barrier layer or the like is formed over the recording layer, this layer) of the laminated body is co-adhered with the cover sheet 53 are as described for the first and fifth embodiments.

Bonding adhesives and pressure-sensitive adhesives are as described for the first and fifth embodiments.

If a protective film formed of a polyethylene film, a polypropylene film, a polyethylene terephthalate film, a vinyl chloride film, a vinylidene chloride film or the like is disposed at a light incidence face side of the cover sheet in advance, vacuum adsorption marks will be less likely to be formed at the light incidence face of the cover sheet, and generation of flaws can be prevented.

There is a need for the optical information recording medium that is prepared to be conveyed upward from the flat table. However, because there is a vacuum state in the holes of the flat table, the optical information recording medium may be tightly adhered and it may be difficult to remove the optical information recording medium. In such a case, the optical information recording medium can be more easily removed by flowing air from the air extraction system to the holes to push the optical information recording medium off. It is preferable if the air that is employed at this time is put into a clean state, by being passed through an anti-dust filter, undergoing a drying process and the like, so as not to contaminate the optical information recording medium. A type of the air may preferably be compressed air or the like.

As a method of adsorption other than that described above, an electrostatic adsorption method, in which static electricity is applied at the cover sheet and the cover sheet is mounted on the flat table by electrical attraction, may be applied.

The flat table is not limited to the flat table which is provided at the spin coater as described above. It is sufficient that the flat table can fix and maintain flatness of the cover sheet at the time of sticking together the cover sheet and the laminated body.

The optical information recording medium relating to the seventh embodiment, which is capable of suppressing the occurrence of warping and can be satisfactorily provided for practical use, is prepared by the co-adhering step described above.

The laminated body that is to be stuck together with the cover sheet in the co-adhering step is prepared by a laminated body preparation process. The laminated body preparation process is as has been described for the first and fifth embodiments.

### (4) Fourth and Eighth Embodiments

An optical information recording medium (an eighth embodiment) of the present invention is produced by sticking a cover sheet on a recording layer of a laminated body in which a recording layer and the like are formed on a substrate.

Herebelow, the optical information recording medium (the eighth embodiment) of the present invention and a production process thereof (a fourth embodiment) will be described in detail with emphasis on a co-adhering step.

### Co-Adhering Step

The co-adhering step is a step of sticking the cover sheet, which serves as a cover layer, together with the recording layer of the laminated body as described for the first and fifth embodiments, in order to protect the recording layer and the like inside the optical information recording medium. The co-adhesion of the cover sheet and the laminated body is preferably carried out with a bonding adhesive or a pressure-sensitive adhesive.

Material and thickness of the cover sheet are as described for the first and fifth embodiments.

It is preferable if the cover sheet has substantially the same dimensions as the laminated body. When a cover sheet with substantially the same dimensions is employed, the occurrence of warping, which is likely to occur in cases in which a roll-form cover sheet is employed, can be suppressed.

A release sheet is provided at a face of the cover sheet that is opposite to a face of the cover sheet that is to be co-adhered. It is preferable if, in a state in which the release sheet is stuck together with the cover sheet, at least a portion of the release sheet protrudes to an outer side relative to the cover sheet.

Because this protruding portion is provided, the release sheet can be easily released from the cover sheet, starting from the protruding portion, after the cover sheet has been stuck together with the laminated body, which is described later. Consequently, because damage is not caused to an end face of the cover sheet at the time of release, an optical information recording medium which can be provided for practical use can be prepared.

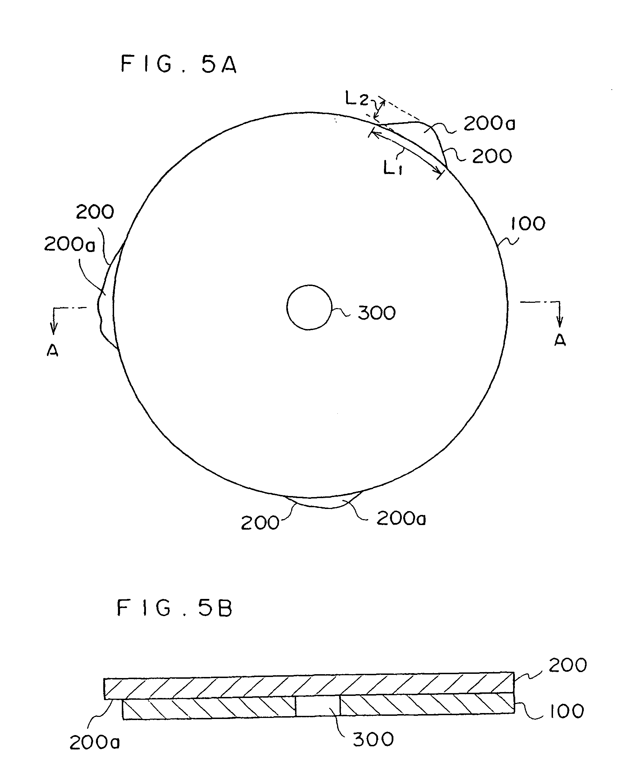

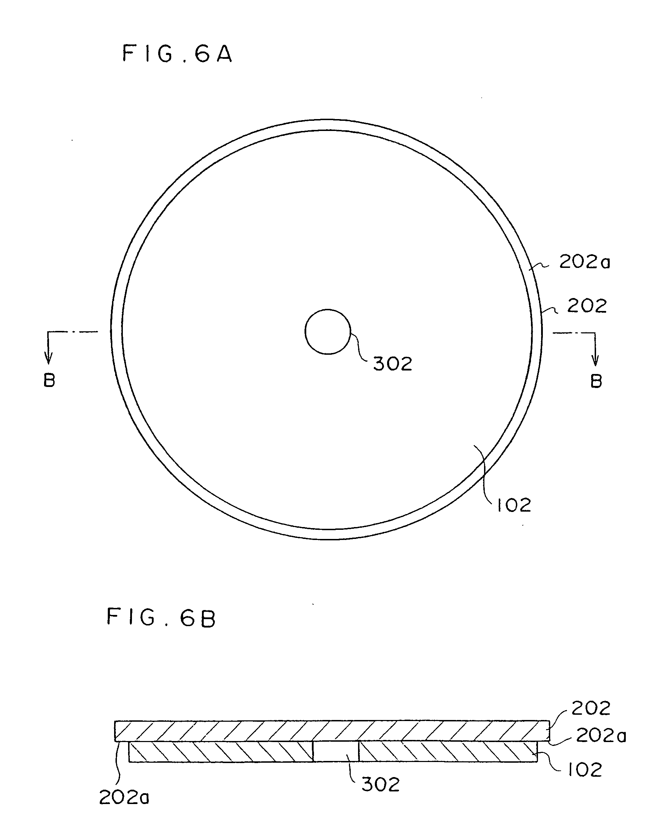

Examples of cover sheets to which release sheets are attached, which can be preferably employed in the production process of the present invention, are shown in Figures 5A, 5B, 6A and 6B.

Figure 5A shows a view of a cover sheet 100 which is provided with a center hole 300, viewed from a face thereof at which a release sheet 200 is not provided. Figure 5B shows a sectional view of the cover sheet 100 that is shown in Figure 5A, cut along A-A. As is shown in Figures 5A and 5B, the disc-form cover sheet 100 is provided on the release sheet 200. Portions of the release sheet 200 project to an outer side relative to the cover sheet 100, and protruding portions 200a are formed thereat. Accordingly, as shown in Figure 5B, apart from the protruding portions 200a, end faces of the cover sheet 100 and the release sheet 200 coincide.

Locations and numbers of the protruding portions 200a that are formed are suitably specified in accordance with release conditions at the time of release of the release sheet 200, after the cover sheet 100 has been stuck together with the laminated body, and are not particularly limited.

The protruding portions 200a fulfil a role as start points for release at the time of release, and are portions which are to be engaged by a releasing apparatus or the like. Accordingly, in consideration of operability, that is to say, consistent release, it is preferable if at least one of a plurality of the protruding portions has a maximum length L 1 in a circumferential direction of at least 1 mm, as shown in Figure 5A, and more preferably at least 5 mm.

In the same regard, a maximum length L2 in a radial direction is preferably at least 0.5 mm, more preferably at least 1 mm, and even more preferably at least 2 mm.

Further, if L2 is too large, then curling may occur during handling, and a tilt value may become large. Accordingly, L2 is preferably not more than 50 mm, is more preferably not more than 20 mm, is even more preferably not more than 10 mm, and is particularly preferably not more than 5 mm.

As shown in Figures 6A and 6B, a protruding portion 202a may be provided at the whole of an outer periphery of a cover sheet 102 which is provided with a center hole 302. As shown in Figure 6A, because the center of the cover sheet 102 and the center of the release sheet 202 coincide, a radial direction width of the protruding portion 202a is constant.

Accordingly, as shown in Figure 6B, which is a sectional view along B-B of Figure 6A, an end face of the cover sheet 102 is disposed at an inner diametric side relative to the release sheet 202.

The mode shown in Figures 6A and 6B has the advantage that, when the cover sheet 102 is to be released, it is possible to start release from any position, and positioning of the cover sheet 102 in a rotation direction is not necessary. This is particularly preferable.

It is not required that the center of the cover sheet 102 and the center of the release sheet 202 coincide. It is sufficient that length of the protruding portion 202a in the circumferential direction (L1 in Figure 5A) and length thereof in the radial direction (L2 in Figure 5A) are respectively within desired ranges as described earlier.

In either of the modes shown in Figures 5A, 5B, 6A and 6B, the release sheet may be provided with a hole that has the same form at the same location or is smaller than a central hole of the cover sheet. However, in consideration of handling in practice, it is preferable if this hole is not provided.

The temperature and humidity of the atmosphere when the recording layer (in a case in which a layer such as a barrier layer or the like is formed over the recording layer, this layer) of the laminated body is co-adhered with the cover sheet are as described for the first and fifth embodiments.

Bonding agents and pressure-sensitive adhesives are as described for the first and fifth embodiments. It is preferable if a pressure-sensitive adhesive is applied to the co-adhesion face of the cover sheet in advance. An application amount of the pressure-sensitive adhesive is preferably as described for the first and fifth embodiments.

A duration of this temperature and humidity when the cover sheet is being co-adhered on the recording layer of the laminated body is at least a duration from a time at which co-adhesion of the cover sheet on the laminated body commences until, after co-adhesion, the bonding adhesive or pressure-sensitive adhesive is cured and the cover sheet is fixed on the recording layer.

Furthermore, in preferable modes, it is preferable if conditions substantially the same as the temperature and humidity at the time of co-adhering the laminated body and the cover sheet are preparatorily maintained before the co-adhesion.

After the cover sheet has been stuck together with the laminated body and the adhesive or the like has been cured, the release sheet is released. Here, in the preparation process of the present invention, because the protruding portion is provided at the release sheet, the protrusion portion can serve as a starting point, and the release sheet can be released easily. Furthermore, because the start point for release is positioned outside of the end face of the cover sheet, the end face will not be damaged. Accordingly, an optical information recording medium can be effectively prepared for practical use.

The optical information recording medium relating to the eighth embodiment, which can suppress the occurrence of warping and be satisfactorily provided for practical use, is prepared by the co-adhering step described above.

The laminated body that is to be stuck together with the cover sheet in the co-adhering step is prepared by a laminated body preparation process. The laminated body preparation process is as has been described for the first and fifth embodiments.

### Recording/Playback Method

Next, a method for recording information to the optical information recording medium of the present invention (the optical information recording media corresponding to the fifth to eighth embodiments) and a method for replaying the recorded information will be described.

Recording of information to the optical information recording medium is carried out, for example, as follows.

First, while the optical information recording medium is being rotated at a certain linear speed, laser light of 500 nm or less for recording is irradiated from the cover sheet side. Consequent to this irradiation of laser light, the recording layer absorbs the light and temperature is raised locally. A physical or chemical change (for example, the formation of a pit) occurs, and optical characteristics of the recording layer are changed. Information is recorded by this change of the optical characteristics.

Examples of laser light sources having an oscillation wavelength of 500 nm or less may include a blue-violet semiconductor laser having an oscillation wavelength in a range from 390 to 415 nm, a blue-violet SHG laser having a central oscillation wavelength of around 430 nm, and the like.

For raising recording density, Numerical Aperture (NA) of an object lens that is employed at a pickup is preferably at least 0.7, and is more preferably at least 0.85.

Playback of the recorded information may be carried out by irradiating laser light with the same wavelength as the laser that was employed for recording the information, or a shorter wavelength, from the cover sheet side while the optical information recording medium is being rotated at a certain linear speed, and detecting reflected light thereof.

### EXAMPLES

The present invention will be specifically described by the following Examples. The present invention is not limited to these Examples.

### Examples 1 and 2 and Comparative Example 1

### Example 1

In an Ar atmosphere, a light reflection layer formed of Ag (with thickness 100 nm) was formed by DC sputtering (using a cube, produced by Unaxis) on a surface, which had a groove, of a substrate made of polycarbonate resin, which had been prepared by injection molding.

The substrate had a thickness of 1.1 mm, an external diameter of 120 mm, an internal diameter of 15 mm, and a spiral groove (with groove depth 30 nm, width 15 nm, and track pitch 340 nm).

2 g of a colorant represented by the following chemical formula (compound 1) was added to 100 ml of 2,2,3,3-tetrafluoropropanol and dissolved. Thus, a colorant application fluid was prepared. The prepared colorant application fluid was applied on the light reflection layer by a spin-coating method under conditions of 23°C, 50% RH, while a rotation speed was varied from 300 to 4000 rpm. Thereafter, the sample was stored at 23°C, 50% RH for 1 hour. Thus, a recording layer (with a thickness at groove interiors of 100 nm and a thickness at land portions of 70 nm) was formed.

The recording layer was formed at a region of 44 mm and more from a center of the substrate.

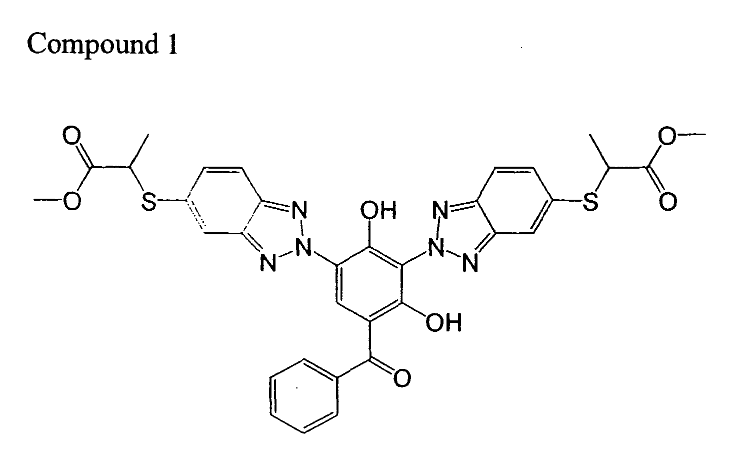

After the recording layer had been formed, an annealing process was executed in a clean oven. The annealing process was carried out with the substrate being supported at a vertical stack-pole with gaps being held open by spacers, and being maintained at 40°C for 1 hour.

Thereafter, a barrier layer (with thickness 50 nm) formed of ZnS/SiO₂ (ZnS : SiO₂ = 8 : 2 (mass ratio)) was formed on the recording layer by RF sputtering. Thus, the laminated body was prepared (the laminated body preparing step). Conditions for formation of the barrier layer were as follows.

| | |
|---|---|
| Power | 4 kW |
| Pressure | 2 × 10⁻² hPa |
| Duration | 10 seconds |

The laminated body that had been prepared was placed on a flat table of a spin coater with the barrier layer upward. An adhesive (SD318, produced by Dainippon Ink And Chemicals, Incorporated) was dispensed onto the barrier layer in a ring pattern.

As shown in Figure 1, the cover sheet 4 formed of a polycarbonate (PUREACE, produced by Teijin: external diameter 119.5 mm, internal diameter 37 mm, thickness 75 µm) was brought down while being transported by the vacuum adsorption pad 5. The inner periphery boss 11 provided at the flat table 2 and the inner periphery boss 12 provided at the adsorption pad 5 were engaged, and the cover sheet was placed on the laminated body.

Thereafter, while being rotated at rotation speeds from 300 to 5000 rpm over 30 seconds, the adhesive was spread over the whole area, and excess adhesive was thrown off. During rotation, ultraviolet rays were irradiated and the adhesive was cured. Thus, an optical information recording medium was prepared by sticking together the laminated body and the cover sheet (the co-adhering step).

When a co-adhesion layer of the prepared optical information recording medium (a layer formed by the adhesive) was inspected, the layer had excellent adhesion, with no air bubbles and a thickness of 25 µm. A total thickness of the cover layer and the adhesive layer was approximately 100 µm.

### Example 2

An optical information recording medium was prepared in the same manner as in Example 1, except that a cover sheet to which adhesive had been applied was placed on the flat table of the spin coater and, as shown in Figure 2, a laminated body was placed on the cover sheet while being held by the adsorption pad 5.

### Comparative Example 1

An optical information recording medium was prepared in the same manner as in Example 1, except that a cover sheet with an internal diameter of 15 mm was employed, and the laminated body and cover sheet were stuck together using a central boss (an internal periphery boss).

### Evaluation of Optical Information Recording Media

The respective optical information recording media prepared in Examples 1 and 2 and Comparative Example 1 were measured for eccentricity using a microscope equipped with a dimension-measuring function (MMCAL21, produced by Olympus Optical Co., Ltd.).

Eccentricity of the optical information recording media prepared in Examples 1 and 2 were 18 µm and 16 µm, respectively. In contrast, eccentricity of the optical information recording medium prepared in Comparative Example 1 was 120 µm.

This was because, in the optical information recording medium of Comparative Example 1, a portion of the cover sheet protruded at the central hole of the substrate, whereas in the optical information recording media of Examples 1 and 2, portions of the cover sheets did not protrude into the central holes. Thus, it may be said that the cover sheets could be stuck on the laminated bodies with high accuracy.

### Example 3 and Comparative Example 2

### Example 3

In an Ar atmosphere, a light reflection layer formed of Ag (with thickness 100 nm) was formed by DC sputtering (using a cube, produced by Unaxis) on a surface, which had a groove, of a substrate made of polycarbonate resin, which had been prepared by injection molding.

The substrate had a thickness of 1.1 mm, an external diameter of 120 mm, an internal diameter of 15 mm, and a spiral groove (with groove depth 30 nm, width 15 nm, and track pitch 340 nm).

2 g of the colorant represented by the previously mentioned chemical formula (compound 1) was added to 100 ml of 2,2,3,3-tetrafluoropropanol and dissolved. Thus, a colorant application fluid was prepared. The prepared colorant application fluid was applied on the light reflection layer by a spincoating method under conditions of 23°C, 50% RH, while the rotation speed was varied from 300 to 4000 rpm. Thereafter, the sample was stored at 23°C, 50% RH for 1 hour. Thus, a recording layer (with a thickness at groove interiors of 100 nm and a thickness at land portions of 70 nm) was formed.

The recording layer was formed at a region of 44 mm and more from a center of the substrate.

After the recording layer had been formed, an annealing process was executed in a clean oven. The annealing process was carried out with the substrate being supported at a vertical stack-pole with gaps being held open by spacers, and being maintained at 40°C for 1 hour.

Thereafter, a barrier layer (with thickness 50 nm) formed of ZnS/SiO₂ (ZnS : SiO₂ = 8 : 2 (mass ratio)) was formed on the recording layer by RF sputtering. Thus, the laminated body was prepared (the laminated body preparing step). Conditions for formation of the barrier layer were as follows.

| | |
|---|---|
| Power | 4 kW |
| Pressure | 2 × 10⁻² hPa |
| Duration | 10 seconds |

The laminated body that had been prepared was placed on a flat table of a spin coater with the barrier layer upward. An adhesive (SD318, produced by Dainippon Ink And Chemicals, Incorporated) was dispensed onto the barrier layer in a ring pattern.

A cover sheet formed of polycarbonate (PUREACE, produced by Teijin: external diameter 119.5 mm, internal diameter 17 mm, thickness 75 µm) was brought down while being transported by a vacuum adsorption pad, and the cover sheet was placed on the barrier layer.

Here, regulation of the co-adhesion position was carried out by disposing an internal peripheral portion of a positioning chuck, which was provided at an outer periphery of the vacuum pad, adjacent to an outer peripheral face of the substrate.

Thereafter, while being rotated at rotation speeds from 300 to 5000 rpm over 30 seconds, the adhesive was spread over the whole area, and excess adhesive was thrown off. During rotation, ultraviolet rays were irradiated and the adhesive was cured. Thus, an optical information recording medium was prepared by sticking together the laminated body and the cover sheet (the co-adhering step).

When a co-adhesion layer of the prepared optical information recording medium (a layer formed by the adhesive) was inspected, the layer had excellent adhesion, with no air bubbles and a thickness of 25 µm. A total thickness of the cover layer and the adhesive layer was approximately 100 µm.

### Comparative Example 2

An optical information recording medium was prepared in the same manner as in the Example 3, except that a co-adhesion position of a cover sheet with an internal diameter of 15 mm was regulated by a central boss (an internal peripheral portion), and the laminated body and cover sheet were stuck together in accordance with the central boss (an internal periphery boss).

### Evaluation of Optical Information Recording Media

The respective optical information recording media prepared in Example 3 and Comparative Example 2 were measured for eccentricity using a microscope equipped with a dimension-measuring function (MMCAL21, produced by Olympus Optical Co., Ltd.).

Eccentricity of the optical information recording medium prepared in Example 3 was 22 µm. In contrast, eccentricity of the optical information recording medium prepared in Comparative Example 2 exceeded 100 µm. This was because, in the optical information recording medium of Comparative Example 2, a portion of the cover sheet protruded at the central hole of the substrate, whereas in the optical information recording medium of Example 3, no portion of the cover sheet protruded into the central hole. Thus, it may be said that the cover sheet could be stuck on the laminated body with high accuracy.

### Example 4 and Comparative Example 3

### Example 4

In an Ar atmosphere, a light reflection layer formed of Ag (with thickness 100 nm) was formed by DC sputtering (using a cube, produced by Unaxis) on a surface, which had a groove, of a substrate made of injection-molded polycarbonate resin. The substrate had a thickness of 1.1 mm, an external diameter of 120 mm, an internal diameter of 15 mm, and a spiral groove (with groove depth 30 nm, width 15 nm, and track pitch 340 nm).

2 g of the colorant represented by the previously mentioned chemical formula (compound 1) was added to 100 ml of 2,2,3,3-tetrafluoropropanol and dissolved. Thus, a colorant application fluid was prepared. The prepared colorant application fluid was applied on the light reflection layer by a spincoating method under conditions of 23°C, 50% RH, while the rotation speed was varied from 300 to 4000 rpm. Thereafter, the sample was stored at 23°C, 50% RH for 1 hour. Thus, a recording layer (with a thickness at groove interiors of 100 nm and a thickness at land portions of 70 nm) was formed.

After the recording layer had been formed, an annealing process was executed in a clean oven. The annealing process was carried out with the substrate being supported at a vertical stack-pole with gaps being held open by spacers, and being maintained at 40°C for 1 hour.

Thereafter, a barrier layer (with thickness 50 nm) formed of ZnS/SiO₂ (ZnS : SiO₂ = 8 : 2 (mass ratio)) was formed on the recording layer by RF sputtering. Thus, the laminated body was prepared (the laminated body preparing step). Conditions for formation of the barrier layer were as follows.

| | |
|---|---|
| Power | 4 kW |
| Pressure | 2 × 10⁻² hPa |
| Duration | 10 seconds |

A cover sheet formed of polycarbonate (PUREACE, produced by Teijin: external diameter 120 mm, internal diameter 15 mm, thickness 85 µm) was placed on a flat table of a spin coater. An adhesive (SD318, produced by Dainippon Ink And Chemicals, Incorporated) was dispensed onto the cover sheet in a ring pattern, and the disc was rotated substantially by one full turn while fixed at a nozzle. The fixing of the cover sheet was carried out by vacuum adsorption using the principle illustrated in Figure 4.

Thereafter, the substrate was disposed by being matched up with an inner peripheral boss and laid onto the cover sheet. The cover sheet and substrate were rotated with a rotation speed varying from 2000 to 7000 rpm, the adhesive was spread over the whole area, and excess adhesive was thrown off. During rotation, ultraviolet rays were irradiated and the adhesive was cured. Thus, an optical information recording medium was prepared by sticking the cover sheet together with the laminated body (the co-adhering step).

When a co-adhesion layer of the prepared optical information recording medium (a layer formed by the adhesive) was inspected, the layer had excellent adhesion, with no air bubbles and a thickness of 25 µm. A total thickness of the cover layer and the adhesive layer was approximately 110 µm.

### Comparative Example 3

An optical information recording medium was prepared in the same manner as in the Example, except that the laminated body was placed on the flat table and then the cover sheet was laid thereon and co-adhered.

### Evaluation of Optical Information Recording Media

For the optical information recording media prepared in Example 4 and Comparative Example 3, a state of warping (a radial tilt value) of the optical information recording medium as a whole was measured by a DLD4000 (produced by Japan EM Co., Ltd.).

Results thereof were 0.62° and 0.85° for the optical information recording media of Example 4 and Comparative Example 3, respectively. Thus, the occurrence of warping had been suppressed more in Example 4.

### Examples 5 and 6 and Comparative Examples 4 and 5

### Example 5

In an Ar atmosphere, a light reflection layer formed of Ag (with thickness 100 nm) was formed by DC sputtering on a surface, which had a groove, of a substrate made of injection-molded polycarbonate resin. The substrate had a thickness of 1.1 mm, an external diameter of 120 mm, an internal diameter of 15 mm, and a spiral groove (with groove depth 30 nm, width 15 nm, and track pitch 340 nm).

2 g of the colorant represented by the previously mentioned chemical formula (compound 1) was added to 100 ml of 2,2,3,3-tetrafluoropropanol and dissolved. Thus, a colorant application fluid was prepared. The prepared colorant application fluid was applied on the light reflection layer by a spincoating method under conditions of 23°C, 50% RH, while the rotation speed was varied from 300 to 4000 rpm. Thereafter, the sample was stored at 23°C, 50% RH for 1 hour. Thus, a recording layer (with a thickness at groove interiors of 100 nm and a thickness at land portions of 70 nm) was formed.

After the recording layer had been formed, an annealing process was executed in a clean oven. The annealing process was carried out with the substrate being supported at a vertical stack-pole with gaps being held open by spacers, and being maintained at 40°C for 1 hour.

Thereafter, a barrier layer (with thickness 50 nm) formed of ZnS/SiO₂ (ZnS : SiO₂ = 8 : 2 (mass ratio)) was formed on the recording layer by RF sputtering. Thus, the laminated body was prepared. Sputtering conditions when the barrier layer was formed were as follows.

| | |
|---|---|
| Power | 4 kW |
| Pressure | 2 × 10⁻² hPa |
| Duration | 10 seconds |

A release sheet (external diameter 130 mm) was applied at one face of a cover sheet formed of polycarbonate (external diameter 120 mm, internal diameter 15 mm, thickness 80 µm), and a pressure-sensitive adhesive was applied at the other face of the cover sheet. The pressure-sensitive adhesive face of the cover sheet was matched up with an internal peripheral boss, and disposed on and co-adhered with the barrier layer of the laminated body under conditions of temperature 25°C, relative humidity 50% RH. Directly after the co-adhesion, the release sheet was released, starting from a protruding portion (an outer peripheral portion of the release sheet). Thus, an optical information recording medium was prepared. Incidentally, the center of the release sheet and the center of the cover sheet had been coincident.

The release of the release sheet during the preparation of the optical information recording medium was able to be carried out with ease, and there was no damage to an end face of the cover sheet.

When a state of warping (a radial tilt value) of the optical information recording medium as a whole was measured by a DLD4000 (produced by Japan EM Co., Ltd.), the value was 0.4°. Thus, the occurrence of warping had been suppressed.

### Example 6

An optical information recording medium was prepared in the same manner as in Example 5, except that a release sheet with an external diameter of 240 mm was employed.

The release of the release sheet during the preparation of the optical information recording medium could be carried out with ease, and there was no damage to an end face of the cover sheet.

A radial tilt value was 0.7°. Thus, the occurrence of warping was suppressed, though not to the same extent as in Example 5.

### Comparative Example 4

An optical information recording medium was prepared in the same manner as in Example 5, except that the external diameter of the release sheet was the same as that of the cover sheet.

Because the external diameter of the release sheet was the same as the external diameter of the cover sheet, the release of the release sheet during the preparation of the optical information recording medium was troublesome, and an end face of the cover sheet was damaged.

### Comparative Example 5

An optical information recording medium was prepared in the same manner as in Example 5, except that the external diameter and internal diameter of the release sheet were the same as those of the cover sheet.

Because the external diameter of the release sheet was the same as the external diameter of the cover sheet, the release of the release sheet during the preparation of the optical information recording medium was troublesome, and an end face of the cover sheet was damaged.

In accordance with the present invention hereabove, an optical information recording medium which reduces eccentricity during playback and a production process thereof can be provided. Furthermore, an optical information recording medium which suppresses the occurrence of warping and a production process thereof can be provided. Further still, an optical information recording medium which suppresses the occurrence of warping and can be provided for practical use without an end face of a cover sheet being damaged, and a production process thereof, can be provided.

## Claims

1. An optical information recording medium production process comprising the steps of:
preparing a laminated body, including forming a recording layer, at which recording of information by laser light with a wavelength of 500 nm or less is possible, on a substrate in which a groove with a track pitch of 200 to 400 nm and a groove depth of 10 to 150 nm is formed;
co-adhering a cover sheet on the recording layer of the laminated body, the cover sheet being provided with a release sheet at a face of the cover sheet which is opposite to a face thereof that is to be co- adhered, at least a portion of the release sheet including a protruding portion which protrudes to an outer side relative to the cover sheet; and
after co-adhering the cover sheet to the laminated body, releasing the release sheet, starting from the protruding portion.

2. The optical information recording medium production process of claim 1, wherein the protruding portion is provided at the whole of an outer periphery of the cover sheet.

3. An optical information recording medium produced by a process comprising:
preparing a laminated body, including forming a recording layer, at which recording of information by laser light with a wavelength of 500 nm or less is possible, on a substrate in which a groove with a track pitch of 200 to 400 nm and a groove depth of 10 to 150 nm is formed;
co-adhering a cover sheet on the recording layer of the laminated body, the cover sheet being provided with a release sheet at a face of the cover sheet which is opposite to a face thereof that is to be co-adhered, at least a portion of the release sheet including a protruding portion which protrudes to an outer side relative to the cover sheet; and
after co-adhering the cover sheet to the laminated body, releasing the release sheet, starting from the protruding portion.
